# EUROPEAN PATENT APPLICATION

(11) **EP 1 949 991 A1**
(43) Date of publication of application: **30.07.2008**
(21) Application number: 07004506.7
(22) Date of filing: 06.03.2007
(51) Int. Cl.: B23B 49/02

(54) **Drill jig**

(30) Priority: 26.01.2007 GB 0701612
(71) Applicant: Armeg Ltd, Dronfield, Derbyshire S18 2XJ (GB)
(72) Inventor: Hill, Ronald Peter, Chapeltown Sheffield S35 1YS (GB); Bentley, Paul James, Sheffield S8 8QJ (GB)

(57) **Abstract**

A tool for supporting flat tipped drills by way of cut out sections (1) of varying sizes, to accommodate multiple diameters, made from multiple layers where the bottom layer (2) is made from a soft material to allow the product to mould to the texture of the surface it is to be used on and provided with at least one layer (3) which is rigid enough to prevent the tool from stretching outwards during use.

## Description

### Field of the invention

This invention provides a method of locating drill bits such as diamond tile drills, which are not provided with a point to locate on initial start up, to prevent the drills from skidding across the surface and to allow accurate hole placement.

### Background of the invention

When using diamond tile drills the initial starting of the hole is difficult due to the drill 'skidding' across the surface of the tile which can damage the tile. This problem also results in difficulty with accurate hole position.

### Object of the invention

The object of this invention is to produce a device that will enable drills (such as diamond tile drills) to be easily located and allow the hole to be produced without the drill 'skidding' on start up resulting in accurate hole position.

### Summary of the invention

The invention is a solution to locating flat tipped drills comprising of:
i) a soft body section (2) with an adhesive layer
ii) a thin stiff layer (3) attached to the top of the soft body section
iii) multiple cut outs (1) through both sections to locate and support various sizes of drills

### Advantages of the invention

The advantages of this invention is to produce a device that will enable drills (such as diamond tile drills) to be easily located and allow the hole to be produced without the drill 'skidding' on start up resulting in accurate hole position.

### Preferred optional features

The bottom layer should be made of a foam material or similar

The top layer should be made from a plastic material or similar

### Brief description of the drawings:

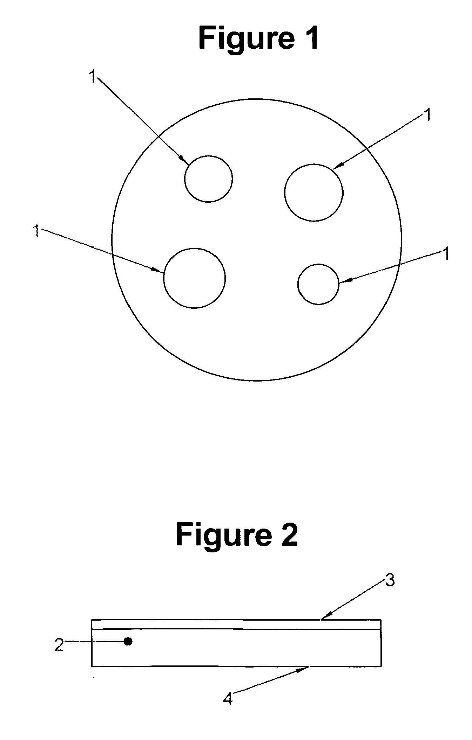

Figure 1 is a top elevation of one example of the tool in accordance with the invention Figure 2 is a side elevation of one example of the tool in accordance with the invention

### Detailed description of the drawings

A tool for supporting flat tipped drills multiple cut out sections (1) to support various drill sizes made from multiple layers where the bottom layer (2) is made from a soft material to allow the product to mould to the texture of the surface it is to be used on, and provided with at least one layer (3) which is rigid enough to prevent the tool from stretching outwards during use. The bottom layer is provided with an adhesive surface (4) to prevent slippage across the work surface.

## Claims

1. A tool for supporting flat tipped drills by way of cut out sections of varying sizes, to accommodate multiple diameters, made from multiple layers where the bottom layer is made from a soft material to allow the product to mould to the texture of the surface it is to be used on and provided with at least one layer which is rigid enough to prevent the tool from stretching outwards during use

2. A tool as claimed in claim 1 where the bottom layer is provided with an adhesive surface to prevent slippage across the work surface.

3. A tool as claimed in claim 1 where the overall thickness is no more than 10mm thick

4. A tool as claimed in claim 1 made from 2 layers

5. A tool as claimed in claim 1 where the bottom layer is made from foam

6. A tool as claimed in claim 1 where the top layer is made from plastic

7. A tool as claimed in claim 1 where the cut out sections are circular of diameters suitable for the diameters of drills to be used
